# EUROPÄISCHE PATENTSCHRIFT

(11) **EP 0 864 391 B1**
(45) Veröffentlichungstag und Bekanntmachung des Hinweises auf die Patenterteilung: **17.05.2000**
(21) Anmeldenummer: 98101313.9
(22) Anmeldetag: 26.01.1998
(51) Int. Cl.: B23K 1/008

(54) **Heizvorrichtung**
Heating apparatus
Dispositif de chauffage

(30) Priorität: 13.03.1997 DE 29704601 U
(43) Veröffentlichungstag der Anmeldung: 16.09.1998
(73) Patentinhaber: Rehm Anlagenbau GmbH + Co., 89143 Blaubeuren-Seissen (DE)
(72) Erfinder: Rehm, Johannes, 89601 Schelklingen (DE)
(74) Vertreter: Grünecker, Kinkeldey, Stockmair & Schwanhäusser Anwaltssozietät

(56) Entgegenhaltungen:
- EP-A- 0 496 581
- US-A- 5 573 174

## Beschreibung

Die Erfindung betrifft eine Heizvorrichtung zum Erwärmen von insbesondere Leiterplatten mit einem Eingabebereich zur Zufuhr der Leiterplatten in im wesentlichen horizontaler Richtung, wenigstens einem in Transportrichtung stromabwärts zum Eingabebereich anschließenden Heizbereich, einem Ausgabebereich zur Abgabe der aus dem Heizbereich zugeführten Leiterplatten in im wesentlichen horizontaler Richtung und einer Eingabebereich, Heizbereich und Ausgabebereich verbindenden Transporteinrichtung.

Bei einer solchen aus der Praxis vorbekannten Heizvorrichtung werden insbesondere Leiterplatten dem Eingabebereich der Heizvorrichtung manuell oder automatisch in stetiger Folge zugeführt. An den Eingabebereich schließt sich ein Heizbereich an. In diesem werden die Leiterplatten aufeinanderfolgend in einem Vertikalförderer nach oben zu einem Horizontalförderer und von diesem zu einem weiteren Vertikalförderer zum Transport der Leiterplatten wieder zurück zur Eingabeebene und zu einem Ausgabebereich transportiert. Der Heizbereich ist bei der vorbekannten Heizvorrichtung in Transportrichtung von Eingabe- und Ausgabebereich zwischen diesen angeordnet. Die beiden Vertikalförderer und der diese verbindende Horizontalförderer bilden eine Transporteinrichtung für die Leiterplatten durch den Heizbereich. Dabei dient der Heizbereich beispielsweise zum Wiederaufschmelzen von Lotpaste, das heißt zum sogenannten Reflow-Löten, zum Aushärten von Klebern zum Befestigen von Bauteilen auf der Leiterplatte, zum Trocknen von Lack auf der Leiterplatte oder dergleichen.

Die aus der Praxis vorbekannte Heizvorrichtung hat eine relativ große Bauhöhe, da die beiden Vertikalförderer des Heizbereichs sich relativ zu Eingabe- und Ausgabebereich nach oben erstrecken. Außerdem ist auch die Abmessung der vorbekannten Heizvorrichtung in Transportrichtung relativ groß, da der Heizbereich in Transportrichtung zwischen Eingabe- und Ausgabebereich angeordnet ist.

Weiterhin zeigt sich bei der bekannten Heizvorrichtung, daß eine entsprechende Heizeinrichtung für den Heizbereich zur Erzeugung entsprechender Temperaturprofile entlang der Vertikalförderer und des Horizontalförderers notwendig ist. So sind bei Erwärmung durch Luftstrom eine Vielzahl von Luftzuführungen entlang der Vertikalförderer mit unterschiedlichen Temperaturen des Luftstroms notwendig. Eine Steuerung der Luftströme ist relativ aufwendig, um beispielsweise in dem nach oben transportierenden Vertikalförderer ein entsprechendes Temperaturprofil unter Berücksichtigung der aufsteigenden, erwärmten Luft aufrecht zu erhalten. Zur Luftstromregulierung müssen außerdem insbesondere im Bereich des die oberen Enden der Vertikalförderer verbindenden Horizontalförderers Entlüftungseinrichtungen mit entsprechender Steuerung vorgesehen werden. Die vorangehend erwähnte aufwendige und komplexe Steuerung und Zufuhr beziehungsweise Abfuhr zur Heißluft gilt in entsprechender Weise auch für Inert-Gase.

Der vorliegenden Erfindung liegt daher die Aufgabe zugrunde, eine Heizvorrichtung mit den Merkmalen des Oberbegriffs des Anspruchs 1 dahingehend zu verbessern, daß diese raumsparend und kompakter aufgebaut und gleichzeitig einfacher zur Erzeugung reproduzierbarer Temperaturprofile innerhalb des Heizbereichs steuerbar ist.

Diese Aufgabe wird bei einer Heizvorrichtung mit den Merkmalen des Oberbegriffs des Anspruchs 1 dadurch gelöst, daß ein Transportweg der Transporteinrichtung im Heizbereich in einer Ebene im wesentlichen quer zur horizontalen Zufuhr- oder Abgaberichtung verläuft und der Transportweg Eingabe- und Ausgabebereich in etwa ringförmig verbindet.

Durch die Anordnung des Heizbereichs im wesentlichen quer zur von Eingabe- und Abgabebereich vorgegebenen Transportrichtung und durch die in etwa ringförmige Anordnung um die Transportrichtung herum ergibt sich ein erheblich reduzierter Platzbedarf bei gleichzeitiger Verringerung der Bauhöhe. Dadurch ist der Heizbereich leichter von allen Seiten beispielsweise zur Wartung oder Reparatur zugänglich.

Dadurch, daß beispielsweise Abschnitte des Heizbereichs, in denen eine höhere Temperatur zur Aufrechterhaltung eines bestimmten Temperaturprofils vorliegt, mit zunehmender Temperatur untereinander angeordnet werden können, kann von Abschnitten mit höherer Temperatur aufsteigende Luft oder erwärmtes Gas in besser kontrollierbarer Weise zum Vorwärmen der Leiterplatten eingesetzt werden. Dadurch sind weniger Zuführungen für beispielsweise Gas mit unterschiedlichen Temperaturen zum Vorwärmen notwendig. Dies vereinfacht den Aufbau des Heizbereichs und dessen Steuerung.

Der Heizbereich kann sich im wesentlichen ringförmig vom Eingabebereich nach unten, unter dem Eingabebereich hindurch und anschließend wieder nach oben zum Ausgabebereich erstrecken. Dabei können Eingabe- und Ausgabebereich in einer Ebene angeordnet sein. Weiterhin können die Leiterplatten durch eine Hubeinrichtung der Transporteinrichtung von dem Eingabebereich zum Heizbereich angehoben und anschließend ringförmig zum Ausgabebereich geführt werden. Dabei kann der Ausgabebereich in diesem Fall in gleicher Ebene wie der Eingabebereich angeordnet sein, so daß durch eine entsprechende Absenkeinrichtung der Transporteinrichtung die Leiterplatten vom Heizbereich wieder zum Ausgabebereich abgesenkt werden. Außerdem können Eingabe- und Ausgabebereich auch in unterschiedlichen Ebenen zueinander angeordnet sein, so daß beispielsweise direkt vom Eingabebereich ohne weiteres Anheben oder Absenken die Leiterplatten zum Heizbereich überführbar und anschließend nach ringförmiger Zurückführung zum Ausgabebereich zu diesem anhebbar oder auf diesen absenkbar sind.

Bevorzugt können allerdings Eingabe- und Ausgabebereich in einer einzigen Horizontalebene angeordnet sein, so daß die Übergabe zum Heizbereich in der gleichen Horizontalebene oder durch die Hubeinrichtung und anschließend zurück zum Abgabebereich durch die Absenkeinrichtung erfolgen kann. Dabei können die Horizontalebenen von Eingabeund Ausgabebereich auch quer zueinander versetzt sein. Dies dient dazu, daß beispielsweise Leiterplatten unbehandelt direkt vom Eingabe- zum Ausgabereich weitergeleitet werden können, während zu behandelnde Leiterplatten im Ausgabebereich seitlich versetzt zu den unbehandelten Leiterplatten ausgegeben werden.

In allen vorangehend erwähnten Fällen der Anordnung von Eingabebereich und Ausgabebereich relativ zueinander und deren Anordnung relativ zum Heizbereich erstreckt sich letzterer im wesentlichen ringförmig und quer zur durch Eingabe- und Ausgabebereich bestimmten Transportrichtung und verbindet die beiden Bereich miteinander.

Um ein Temperaturprofil zum Erwärmen der Leiterplatten genauer reproduzieren und steuern zu können, kann der Heizbereich entlang des Transportweges einen Vorwärmabschnitt, einen Wärmebearbeitungsabschnitt und einen Abkühlabschnitt aufweisen. Diese können bezüglich ihrer Temperatursteuerung voneinander entkoppelt sein. Ebenso kann zumindest der Vorwärmabschnitt bei entsprechender Anordnung relativ zum Wärmebearbeitungsabschnitt von aus letzterem aufsteigendem Heißgas durchströmt werden.

Um ein Vorwärmen der Leiterplatten in einfacher Weise durch beispielsweise nach oben strömendes Heißgas durchzuführen, kann der Vorwärmabschnitt als vertikal abwärts von der Transporteinrichtung durchlaufender Vorwärmschacht ausgebildet sein. In diesem können eine Vielzahl von Leiterplatten durch die Transporteinrichtung nach unten transportiert werden.

Um in diesem Zusammenhang in analoger Weise eine Vielzahl von Leiterplatten zurück zum Ausgabebereich zu transportieren und gleichzeitig abzukühlen, kann der Abkühlabschnitt als vertikal aufwärts von der Transporteinrichtung durchlaufender Kühlschacht ausgebildet sein. Dabei erfolgt die Kühlung konvektiv bevorzugt durch einen aktiven Kühlgastransport unter Verwendung von Einblasöffnungen und Abpumpöffnungen um im Umluftbetrieb.

Um die ringförmige Anordnung des Heizbereichs mit Vorwärmschacht und Kühlschacht in einfachster Weise zu bilden, kann der Wärmebearbeitungsabschnitt als Vorwärmschacht und Kühlschacht im wesentlichen an ihren unteren Enden verbindender Verbindungsschacht ausgebildet sein. In diesem Verbindungsschacht, das heißt im Wärmebearbeitungsabschnitt, erfolgt die eigentliche Bearbeitung der Leiterplatten durch Reflow-Löten, Aushärten von Klebern, Trocknen von Lack oder dergleichen.

Um beispielsweise ein Ausdringen von schädlichen Materialien von der Wärmebearbeitung der Leiterplatten oder ein Ausdringen von einem verwendeten Heißgas oder dergleichen zu verhindern, können Vorwärmschacht und/oder Verbindungsschacht und/oder Kühlschacht gasdicht ausgebildet sein.

Um eine Reaktion des Heizmittels, wie zum Beispiel Luftsauerstoff, mit Materialien der Leiterplatte den Bauelementen auf der Leiterplatte, Lötpaste oder dergleichen zu vermeiden, können im Vorwärmschacht und/oder Verbindungsschacht und/oder Kühlschacht ein Inert-Gas oder Gasgemisch enthalten sein. Ist eine Reaktion von Luftsauerstoff nicht zu erwarten, kann auch Luft zum Kühlen, Vorwärmen und Erwärmen im Verbindungsschacht verwendet werden.

Die Wärmeübertragung auf die Leiterplatte kann beispielsweise durch aufgeheiztes Gas erfolgen. Die Aufheizung kann in diesem Zusammenhang durch eine dem Verbindungsschacht zugeordnete Aufheizeinrichtung durchgeführt werden. Dient die Atmosphäre im Verbindungsschacht nur im wesentlichen als Schutzgas, kann die Aufheizeinrichtung beispielsweise auch als Wärme direkt auf die Leiterplatten übertragende Einrichtung ausgebildet sein. Eine solche Aufheizeinrichtung kann insbesondere zum Aushärten von Klebern oder Trocknen von Lacken auf der Leiterplatte ausreichend sein. Um beim Reflow-Löten genügend Wärme zu erzeugen, kann die Heizeinrichtung wenigstens stellenweise zusätzlich eine Infrarotstrahlungsquelle oder andere Wärmestrahlungsquellen aufweisen.

In dem Verbindungsschacht, das heißt in dem Wärmebearbeitungsbereich, kann außerdem die Erwärmung nur von oben, nur von unten, von oben und unten oder von allen Seiten her erfolgen.

Im einfachsten Fall kann die Zufuhr beziehungsweise Abgabe von Leiterplatten zu beziehungsweise von dem Heizbereich dadurch erfolgen, daß Transportsysteme Eingabe-und/oder Ausgabebereich zugeordnet sind. Mittels eines solchen Transportsystems kann die Leiterplatte von einer anderen Bearbeitungsmaschine der Heizvorrichtung zugeführt beziehungsweise von dieser zur Weiterverarbeitung abtransportiert werden. Solche Transportsysteme können Transportbänder, Magazine oder dergleichen sein.

Um Leiterplatten zu unterschiedlichen Bearbeitungszwecken unterschiedlich zu erwärmen oder eine Leiterplatte in aufeinanderfolgenden Bearbeitungsgängen unterschiedlich zu erwärmen, kann der Verbindungsschacht wenigstens zwei unterschiedlich von der Aufheizeinrichtung beheizbare Heizzonen aufweisen. Ebenso kann jeder Heizzone eine eigene Aufheizeinrichtung zugeordnet sein. Die Heizzonen können bei Bearbeitung einer Leiterplatte hintereinander und bei Bearbeitung verschiedener Leiterplatten nebeneinander angeordnet sein. In diesem Zusammenhang sei angemerkt, daß der Verbindungsschacht eine Anzahl von parallel zueinander angeordneten und voneinander unabhängigen Bearbeitungsstraßen aufweisen kann, die alle mit dem Vorwärm- beziehungsweise Kühlschacht in Verbindung stehen. Dies erweist sich insbesondere dann als vorteilhaft, wenn die Bearbeitungszeit der Leiterplatten im Verbindungsschacht größer als zum Transport in den beiden anderen Schächten ist. Durch parallele Verarbeitung von Leiterplatten kann dadurch eine verbesserte Anpassung an die geringere Transportzeit im Vorwärm- beziehungsweise Kühlschacht durchgeführt werden.

Die Transporteinrichtung kann beispielsweise durchgehend ausgebildet sein und folglich direkt im wesentlichen ringförmig Eingabe- und Ausgabebereich miteinander verbinden. Um die verschiedenen Schächte beispielsweise aufgrund deren unterschiedlicher Temperaturverhältnisse besser voneinander zu isolieren, kann die Transporteinrichtung verschiedene, durch Übergabeeinrichtungen miteinander verbundene Transportabschnitte in den jeweiligen Schächten aufweisen.

Um in diesem Zusammenhang die Übergabe der Leiterplatten vom Eingabebereich beziehungsweise zum Ausgabebereich ebenfalls zu verbessern, können zwischen Eingabe- und Ausgabebereich und der Transporteinrichtung weitere Übergabeeinrichtungen zur Übergabe der Leiterplatten vom Eingabebereich zur Transporteinrichtung beziehungsweise von der Transporteinrichtung zum Ausgabebereich angeordnet sein. Sind dabei Eingabe- und Ausgabebereich in einer Horizontalebene angeordnet, kann eine Übergabeeinrichtung zur Übergabe an und von der Transporteinrichtung ausreichend sein.

Die Transporteinrichtung kann so ausgebildet sein, daß sie Leiterplatten bestimmter Formate oder auch unterschiedlicher Formate direkt transportieren kann. Eine solche Transporteinrichtung kann beispielsweise durch insbesondere Kanten der Leiterplatten abstützende Förderer gebildet sein, die die Leiterplatten entlang des gesamten Transportweges oder gegebenenfalls entlang der durch Übergabeeinrichtungen miteinander verbundenen Transportabschnitte transportieren.

Um jeder Leiterplatte einen entsprechenden Transporteur während der Bewegung entlang des gesamten Transportweges oder entlang der verschiedenen Transportabschnitte zuzuordnen, kann die Transporteinrichtung zumindest teilweise entlang des Transportweges bewegbare Warenträger aufweisen.

Die verschiedenen Übergabeeinrichtungen können so ausgebildet sein, daß sie Leiterplatten direkt oder Warenträger übergeben. Eine solche Übergabe kann beispielsweise vom Eingabebereich an einen zugehörigen Warenträger erfolgen. Dieser wird dann entlang des gesamten Transportweges bewegt und selbst durch weitere Übergabeeinrichtungen zwischen den verschiedenen Transportabschnitten übergeben. Eine solche Übergabeeinrichtung kann als Umlenkeinrichtung zum Umlenken des Warenträgers oder Leiterplatte von einem Transportabschnitt zum nächsten ausgebildet sein.

Um die Transporteinrichtung aber auch den gesamten Heizvorgang in der Heizvorrichtung zu steuern, kann ein entsprechendes Steuersystem der Heizvorrichtung zugeordnet sein. Die Zuordnung kann so erfolgen, daß das Steuersystem über entsprechende Leitungen mit der Heizvorrichtung verbunden oder beispielsweise an dieser von außen zugänglich angeordnet ist. Durch das Steuersystem werden beispielsweise auch die Übergabeeinrichtungen und die Warenträger gesteuert. Dabei kann beispielsweise die Steuerung der Warenträger dahingehend erfolgen, daß deren Geschwindigkeit, Abstand, deren Anzahl oder dergleichen gesteuert wird. Auf diese Weise kann die Durchsatzleistung der Heizvorrichtung beispielsweise konstant gehalten werden oder bei Stau, Störung oder Materialmangel können mehr oder weniger Warenträger eingesetzt werden.

Um Leiterplatten unterschiedlicher Formate in der Heizvorrichtung transportieren und bearbeiten zu können, ist beispielsweise der Einsatz von an die jeweiligen Formate angepaßten Warenträgem denkbar. Bei einem vereinfachten Ausführungsbeispiel kann jeder Warenträger eine verstellbare Stützeinrichtung zur Aufnahme oder Unterstützung unterschiedlicher Formate von Leiterplatten aufweisen. Dadurch ist nur eine Art von Warenträger notwendig. Der Warenträger kann einen Außenrahmen aufweisen, der an das größte Format der zu transportierenden Leiterplatten angepaßt ist. Relativ zum Außenrahmen ist die Stützeinrichtung zum Abstützen kleinerer Formate verstellbar gelagert. Die Stützeinrichtung kann seitliche Ränder einer Leiterplatte abstützen und gegebenenfalls über eine zusätzliche Mittenabstützung verfügen. Auch diese ist verstellbar an Warenträgem gelagert. Die Anpassung der Stützeinrichtung an unterschiedliche Leiterplattenformate kann automatisch in einer Einrichtstation erfolgen. Es ist auch mehr als eine Leiterplatte vom Warenträger transportierbar. Die Stützeinrichtungen werden dann in entsprechender Anzahl eingesetzt.

Wie bereits vorangehend ausgeführt, können bei Ausbildung der Übergabeeinrichtungen zur Übergabe von Warenträgern zwischen den Schächten, die Warenträger im Umlauf entlang des Transportweges bewegt werden. Dadurch wird die Gesamtbearbeitungszeit reduziert. In diesem Zusammenhang sei nochmals darauf hingewiesen, daß beispielsweise Eingabe- und Ausgabebereich auch als ein Bereich ausgebildet sein können, von dem die Leiterplatten übernommen und nach Führung durch den Heizbereich wieder übergeben werden. Ebenso können Eingabe- und Ausgabebereich in horizontaler Transportrichtung hintereinander angeordnet sein, so daß Leiterplatten in Transportrichtung hinter dem Eingabebereich zum Ausgabebereich zurückgeführt werden. Ebenso wurde bereits darauf hingewiesen, daß Eingabe- und Ausgabebereich in unterschiedlichen Höhen angeordnet sein können. Um Zufuhr und Abtransport der Leiterplatten unabhängig voneinander steuern zu können, ist es dabei weiterhin von Vorteil, wenn die dem Eingabe- beziehungsweise Ausgabebereich zugeordneten Transportbänder separat steuerbar sind.

Um weiterhin eine verbesserte Anpassung an die Durchsatzleistung oder den Materialfluß in der Heizvorrichtung zu ermöglichen, kann die Transporteinrichtung eine Pufferstation zur Einlagerung beziehungsweise Entnahme von Warenträgern aufweisen. Je nach Materialanfall wird dann eine passende Anzahl von Warenträgern eingesetzt. Die Pufferstation kann vom Steuersystem der Transporteinrichtung kontrolliert und betätigt werden.

Um den Materialfluß entlang des Transportweges und die Übergabe von und zu Eingabeund Ausgabebereich besser zu steuern, können Eingabebereich und/oder Ausgabebereich und/oder Heizbereich und/oder Transporteinrichtung Sensoren zugeordnet sein.

Die erfindungsgemäße Heizvorrichtung eignet sich in der Ausführungsform mit vertikal nach unten führendem Vorheizbereich und vertikal nach oben führendem Abkühlbereich, die durch einen unter dem Eingabe- und Ausgabeniveau liegenden Verbindungsbereich für die Wärmebearbeitung im wesentlichen horrizontal verbunden sind, besonders vorteilhaft für das Dampfphasen-(vapour phase)-Lötverfahren. Bei diesem Lötverfahren wird die Wärmeübertragung durch Kondensation eines Dampfes bevorzugt an den Anschlußteilen der anzulötenden Bauelemente erzielt. Als Dampf wird ein Medium verwendet, dessen Siedepunkt im Bereich der Liquidustemperatur der Lotpaste liegt. Bei einem System mit Druckausgleich bildet sich über der siedenden Flüssigkeit ein Bereich gesättigten Dampfes, der dieselbe Temperatur wie die siedende Flüssigkeit aufweist. Für das Dampfphasenlöten verwendbare Medien weisen ein höheres Molekulargewicht als Luft oder gegebenenfalls in der Anlage verwendete Inertgase auf. Dadurch ist in der erfindungsgemäßen Heizvorrichtung mit vertikal nach unten führendem Vorheizschacht, tiefliegendem Verbindungsbereich zur Wärmebehandlung und vertikal nach oben führendem Abkühlschacht die Wärmebehandlung zur Durchführung des Reflowlötprozesses mittels des Dampfphasenlötverfahrens im Bereich des gesättigten Dampfes oberhalb des siedenden Mediums, der aufgrund seiner Schwereeigenschaft in den tiefliegenden Bereichen ohne zusätzliche spezielle Systeme zur Versiegelung oder Abdichtung erzeugbar und rückhaltbar ist, besonders vorteilhaft durchführbar.

Im folgenden wird ein vorteilhaftes Ausführungsbeispiel der Erfindung anhand der in der Zeichnung beigefügten Figuren näher erläutert und beschrieben.

Es zeigen:
- Figur 1: eine perspektivische Ansicht einer erfindungsgemäßen Heizvorrichtung in Prinzipdarstellung;
- Figur 2: einen Schnitt entlang der Linie II-II aus Figur 1, und
- Figur 3: ein Ablaufdiagramm zum Betrieb der erfindungsgemäßen Heizvorrichtung.

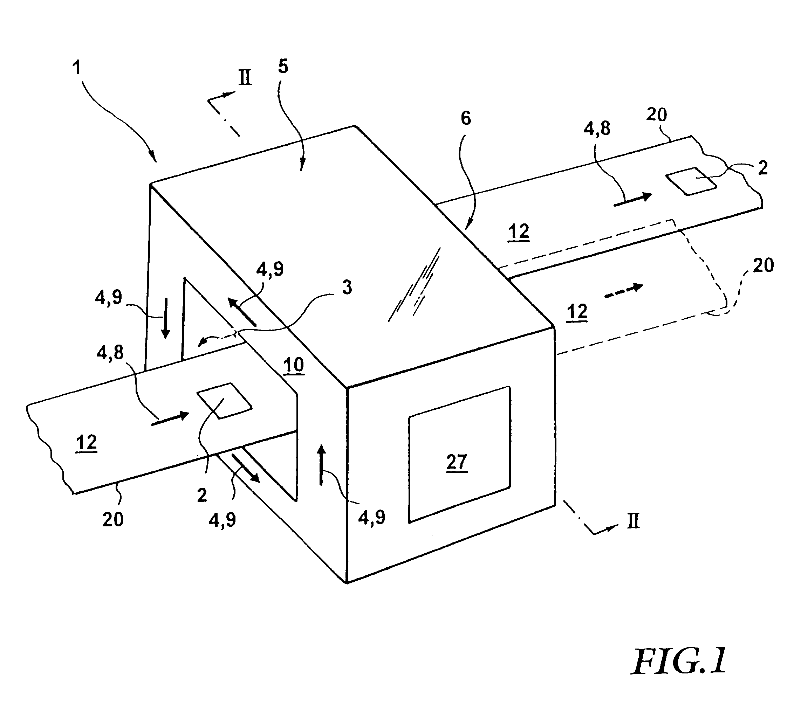

In Figur 1 ist eine vereinfachte und prinzipielle perspektivische Ansicht einer erfindungsgemäßen Heizvorrichtung 1 dargestellt. Diese umfaßt einen Eingabebereich 3, einen Heizbereich 5 und einen Ausgabebereich 6, die in Transportrichtung 4 hintereinander angeordnet sind.

Über den Eingabebereich 3 sind Leiterplatten 2 mittels eines Transportsystems 20 dem Heizbereich 5 zuführbar. Das Transportsystem 20 bestimmt eine Horizontalebene 20, entlang der die Leiterplatte 2 in einer Horizontalrichtung 8 als Transportrichtung 4 zuführbar sind.

Der Ausgabebereich 6 dient zur Ausgabe von bearbeiteten Leiterplatten 2 aus dem Heizbereich 5 und weist ebenfalls ein Transportsystem 20 zum Abtransport der Leiterplatten auf. Das Transportsystem 20 des Ausgabebereichs 6 bestimmt ebenfalls eine Horizontalebene 12 und die Leiterplatten 2 werden in einer Horizontalrichtung 8 als Transportrichtung 4 abgeführt.

Gestrichelt ist ein weiteres Transportsystem 20 dargestellt, daß in der gleichen Horizontalebene 12 wie das Transportsystem 20 des Eingabebereichs 3 angeordnet ist. Das durchgezogen dargestellte Transportsystem 20 des Ausgabebereichs 6 ist in einer gegenüber der Horizontalebene des Transportbandes des Eingabebereichs 3 höheren Horizontalebene 12 angeordnet.

Die relative Anordnung der Transportsysteme für Eingabebereich und Ausgabebereich kann ebenfalls umgekehrt sein.

Innerhalb des Heizbereichs 5 verläuft die Transportrichtung 4 für die Leiterplatten 2 entlang eines Transportweges 9, der sich im wesentlichen ringförmig um die horizontalen Transportrichtungen 8 erstreckt und in einer vertikalen Ebene 10 senkrecht zur Horizontalebene 12 verläuft. Der Transportweg 9 verläuft im wesentlichen ringförmig zwischen Eingabebereich 3 und Ausgabebereich 6.

Dem Heizbereich 5 ist ein Steuersystem 27 zur Steuerung des Materialflusses durch Eingabe-, Heiz- und Ausgabebereich, sowie weiterer insbesondere im Heizbereich 5 enthaltener Einrichtungen zugeordnet.

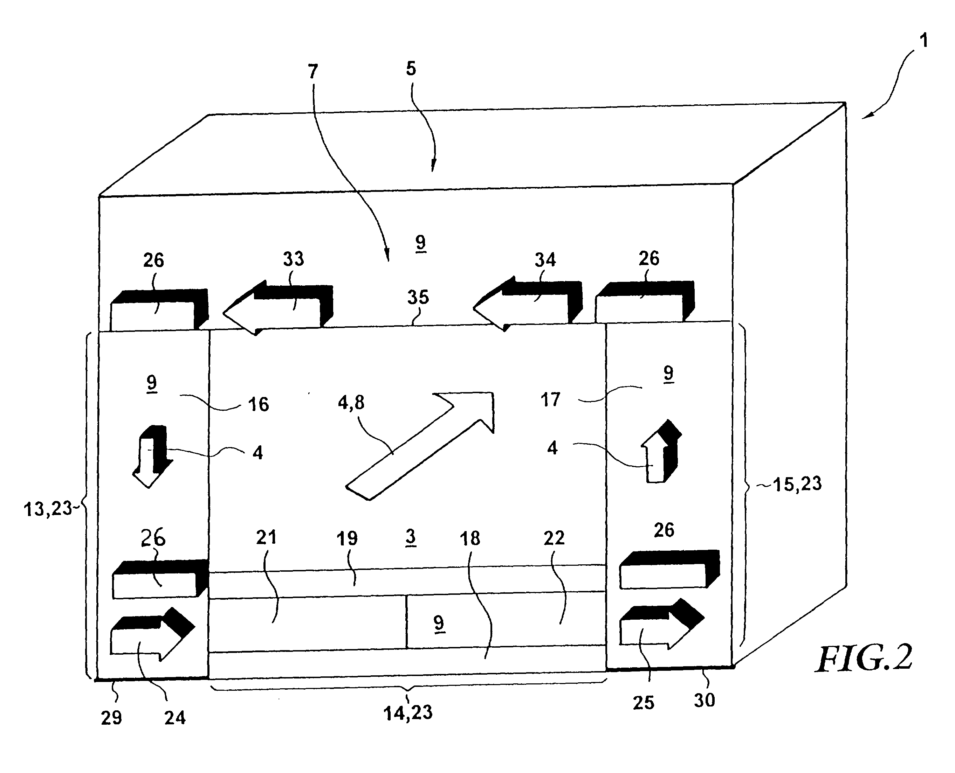

Figur 2 zeigt eine Prinzipdarstellung eines Schnitts entlang der Linie II-II aus Figur 1.

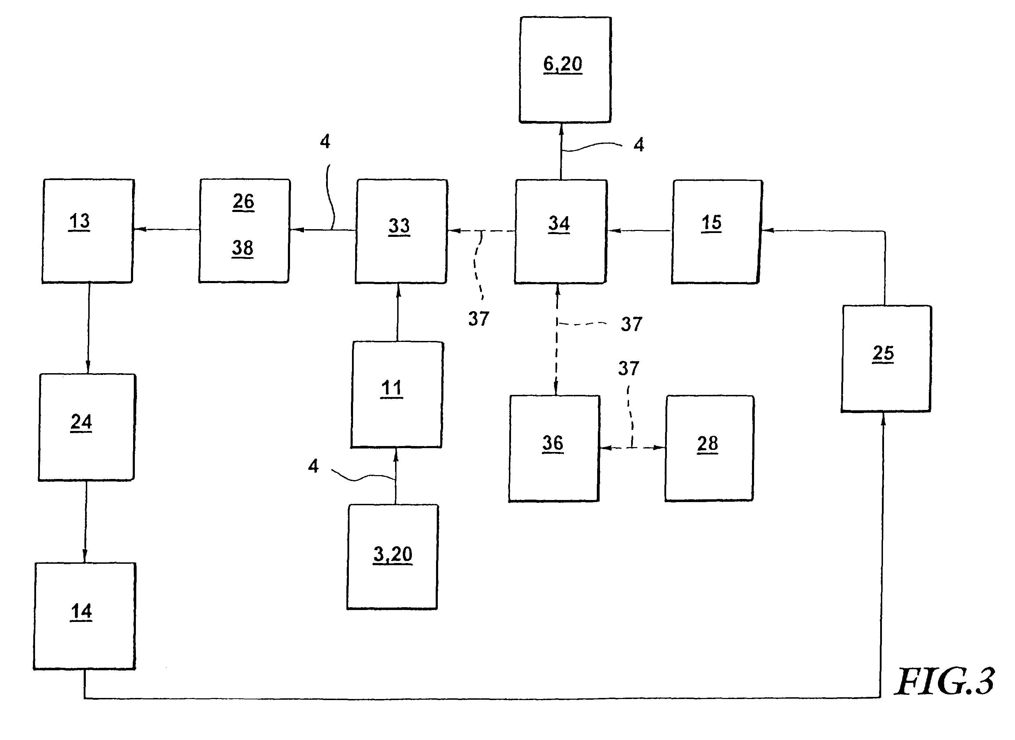

Bei dem dargestellten Ausführungsbeispiel umringt der Transportweg 9 als geschlossener Weg die Horizontalrichtung 8, aus der die Leiterplatten zugeführt, beziehungsweise entlang welcher die Leiterplatten abgeführt werden. Entsprechend werden die Leiterplatten über eine nicht dargestellte Hub-/Absenkeinrichtung 11, siehe Figur 3, auf eine Ein-/Ausgabeebene 35 des Heizbereichs 5 angehoben beziehungsweise gegebenenfalls aus dieser abgesenkt.

In der Eingabeebene 35 ist eine Übergabeeinrichtung 33 zur Übergabe einer Leiterplatte an einen Warenträger 26 angeordnet. Dieser ist zumindest entlang eines Transportabschnittes 23 des Transportweges 9 entlang eines Vorwärmabschnitts 13 des Heizbereichs 5 bewegbar. Der Vorwärmabschnitt 13 ist durch einen sich an die Eingabeebene 35 vertikal nach unten anschließenden Vorwärmschacht 16 gebildet. In diesem ist der Warenträger 26 bis nahe zum unteren Ende 29 des Vorwärmschachtes 16 absenkbar. Dort ist eine weitere Übergabeeinrichtung 24 zur Übergabe der Leiterplatte beziehungsweise des Warenträgers, zum Transport entlang eines weiteren Transportabschnitts 31 im Wärmebearbeitungsabschnitt 14 angeordnet. Der Wärmebearbeitungsabschnitt 14 ist in einem das untere Ende 29 des Vorwärmschachtes 16 mit einem unteren Ende 30 eines sich in Transportrichtung 4 anschließenden Kühlschachtes 17 verbindenden Verbindungsschacht 18 ausgebildet. In diesem ist zumindest eine Aufheizeinrichtung 19 angeordnet, die Wärme auf die Leiterplatte zum Reflow-Löten, Aushärten von Klebern, Trocknen von Lack oder dergleichen überträgt. Die Aufheizeinrichtung 19 ist im dargestellten Ausführungsbeispiel in zwei Heizzonen 21, 22 aufgeteilt, in denen unterschiedliche Temperaturprofile vorliegen können.

Der Kühlschacht 17 erstreckt sich in Transportrichtung 4 vertikal nach oben und an seinem unteren Ende ist eine Übergabeeinrichtung 25 für vom Verbindungsschacht 18 zugeführte und dort bearbeitete Leiterplatten gegebenenfalls mit Weiterträger zum Transport durch einen weiteren Transportabschnitt 32 angeordnet. Dieser ist entlang des Kühlschachtes 17 nach oben bewegbar. Am oberen Ende des Kühlschachtes 17 erfolgt über eine Übergabeeinrichtung 34 eine Abgabe der Leiterplatte vom Warenträger 26 an das Transportband 12 des Ausgabebereichs 6, siehe Figur 1.

Der Kühlschacht 17 beinhaltet einen Abkühlabschnitt 15 mit einem entsprechenden Transportabschnitt 32.

Die verschiedenen Transportabschnitte, die nicht dargestellte Hub-/Absenkeinrichtung und die verschiedenen Warenträger bilden zusammen eine Transporteinrichtung 7 zum Transport von Leiterplatten zwischen Eingabebereich 3 und Ausgabebereich 6 durch den Heizbereich 5.

Weiterhin sei angemerkt, daß die Warenträger 26 auch durch den Verbindungsschacht 18 bewegbar ausgebildet sein können, wobei die beiden Übergabeeinrichtungen 24 und 25 an den unteren Enden 29 und 39 von Vorwärmschacht 16 und Kühlschacht 17 entsprechend zur Übergabe oder Umlenkung der Warenträger zwischen den Schächten dienen.

Im folgenden wird anhand des Ablaufdiagramms nach Figur 3 die erfindungsgemäße Heizvorrichtung zum Bearbeiten von insbesondere Leiterplatten verfahrensmäßig beschrieben.

Leiterplatten 2, siehe Figur 1, werden mittels eines Transportbandes 20 der erfindungsgemäßen Heizvorrichtung in ihrem Eingabebereich 3 zugeführt. Die Leiterplatten werden anschließend entlang der Transportrichtung 4 durch die Heizvorrichtung bis zu einem Transportband 20 im Ausgabebereich 6 transportiert.

Ist der Eingabebereich 3 in einer anderen Horizontalebene als die Eingabeebene 35, siehe Figur 2, angeordnet, wird die zugeführte Leiterplatte mittels der Hubeinrichtung 11 auf die Eingabeebene 35 des Heizbereichs 5 angehoben und dort mittels einer Übergabeeinrichtung 33 direkt einem Warenträger 26 oder zuerst einem weiteren Transportband 38 zugeführt. Wird ein solches zusätzliches Transportband eingesetzt, dient es zum Transfer der Leiterplatte zum Warenträger 26.

Anschließend wird der Warenträger 26 im Vorwärmabschnitt 13 entlang des Vorwärmschachtes 16, siehe Figur 2, abgesenkt und die Leiterplatte erwärmt.

Am Ende des Vorwärmabschnitts beziehungsweise am Ende des Vorwärmschachtes erfolgt eine Übergabe der Leiterplatte oder des Warenträgers 26 mit Leiterplatte mittels einer weiteren Übergabeeinrichtung 24 an den Verbindungsschacht 18, siehe Figur 2, mit Wärmebearbeitungsabschnitt 14. In diesem erfolgt ein Erwärmen der Leiterplatte bis beispielsweise zum Aufschmelzen der Lotpaste, um das Reflow-Löten durchzuführen. Andere Einsatzgebiete sind ein Aushärten von Klebern oder beispielsweise ein Trocknen von Lack auf der Leiterplatte.

Die Wärmeübertragung auf die Leiterplatte kann im Verbindungsschacht durch eine entsprechende Aufheizeinrichtung beispielsweise konvektiv erfolgen. Das Aufheizen kann zusätzlich durch Infrarotstrahlung unterstützt werden.

Der Verbindungsschacht wie auch die anderen Schächte können gasdicht aufgebaut sein, wobei das Aufwärmen, Bearbeiten und Abkühlen der Leiterplatte auch unter einem Inert-Gas oder -Gasgemisch erfolgen kann.

Nach Durchlauf des Wärmebearbeitungsabschnitts im Verbindungsschacht 18, siehe Figur 2, erfolgt eine erneute Übergabe der Leiterplatte beziehungsweise von Warenträger mit Leiterplatte mittels der Übergabeeinrichtung 25 an den vertikal nach oben führenden Kühlschacht 17, siehe ebenfalls Figur 2. In diesem durchläuft die Leiterplatte einen Abkühlabschnitt und wird am oberen Ende des Kühlschachtes mittels einer weiteren Übergabeeinrichtung 34 vom Warenträger abgenommen und direkt oder über die Hub-/Absenkeinrichtung 11 an das Transportband 20 des Ausgabebereichs 6 überführt.

In Figur 3 ist der Transportweg der Leiterplatte gegebenenfalls mit Warenträger durch die durchgezogenen Pfeile in Transportrichtung 4 dargestellt. Die gestrichelt dargestellten Pfeile kennzeichnen die Warenträgertransportrichtung 37, wobei die Warenträger dort mit oder ohne Leiterplatte zwischen Übergabeeinrichtungen 34 und 33 beziehungsweise zwischen Übergabeeinrichtung 34 über eine Ein-/Ausgabestation 36 zu einer Pufferstation 28 transportierbar sind. In der Pufferstation 28 werden nicht benötigte Warenträger eingelagert beziehungsweise auf Anforderung entnommen.

Die dargestellte Transporteinrichtung kann auch ohne Warenträger eingesetzt werden, wobei in diesem Fall die Leiterplatten direkt auf beispielsweise Kantenbereich der Leiterplatten abstützende Transporteure als Transporteinrichtung auflegbar sind.

Auf eine Darstellung entsprechender Sensoren zur Steuerung des Materialflusses durch die Heizvorrichtung und zur Steuerung der Abkühl-, Wärmebearbeitungs- und Vorwärmabschnitte sowie der Aufheizeinrichtung ist zur Vereinfachung verzichtet worden.

Zur Durchführung des Dampfphasenlötverfahrens, für das die gezeigte Ausführungsform besonders vorzüglich geeignet ist, sind zusätzliche, nicht gezeigte Vorrichtungen zum Aufnehmen, Erhitzen und Sieden des den Lötdampf erzeugenden Mediums vorhanden. Weiter sind oberhalb des den Lötdampf erzeugenden Mediums gasdichte Seitenwände, die sich über das Niveau der Transportrichtung im Wärmebearbeitungsbereich nach oben erstrecken, vorhanden. Als Lötmedium werden chemisch inerte Flüssigkeiten verwendet. die einen Siedepunkt im Bereich von 175°C bis 260°C, vorzugsweise 215°C, aufweisen. Diese den inerten Lötdampf erzeugenden Medien haben ein sehr hohes Molekulargewicht, so daß sich über dem siedenden Medium ein Bereich gesättigten Dampfes bildet, der aufgrund der Schwere des Lötdampfs im Vergleich zur umgebenden Atmosphäre im durch die Seitenwände gebildeten "Topf' gefangen bleibt und sich nicht verflüchtigt. Daher verbleibt der Bereich gesättigten Dampfes des Lötmediums in dem gegenüber dem Ein/Ausgabebereich abgesenkten Wärmebehandlungsbereich, der zum Vorheiz- und Abkühlschacht zum Transport der Baugruppen offen ist. Aufgrund des offenen Systems tritt keine Druckerhöhung durch das Sieden des Lötmediums auf, so daß der Bereich gesättigten Dampfes oberhalb des siedenden Mediums die gleiche Temperatur wie das siedende Medium (Siedetemperatur) aufweist. Diese Ausführungsform der erfindungsgemäßen Heizvorrichtung vereinigt daher die Vorteile der kompakten Bauweise und der Absenkung der Baugruppen zur Durchführung des vorteilhaften Dampfphasenlötverfahrens.

Mit dem Dampfphasenlötverfahren, das mit der erfindungsgemäßen Heizvorrichtung besonders vorteilhaft ausführbar ist, läßt sich ein sehr temperaturkontrolliertes Reflowlöten unter besonders effizienter Wärmeübertragung auf das Lötgut durchführen. Der Heißdampf, in den das Lötgut abgesenkt wird, kondensiert an den noch kühleren Bauelementen, und in besonders starkem Maß an den Anschlußbeinchen der Bauelemente, so daß ein Aufschmelzen der Lotpaste sehr zuverlässig und schnell auftritt. Da die Wärme an das Lötgut nicht durch ein Temperaturgefälle, wie bei einer Konvektionsheizung, sondern durch die bei dem Phasenübergang von gasförmig zu flüssig frei werdende latente Wärme bei im wesentlichen konstanter Temperatur erfolgt, ist eine Überhitzung des Lötguts zuverlässig vermieden. Die Wärmeübertragungsgeschwindigkeiten beim Dampfphasenlöten sind sehr hoch und entsprechen einer Wärmeübertragung durch ein flüssiges Heißmedium. Daher ist das Dampfphasenlötverfahren sehr schnell und effizient. Außerdem findet die Wärmeübertragung besonders ausgeprägt an den Anschlußbeinchen der Bauelemente statt, an denen die Lotpaste vorhanden ist, da diese ein besonders hohes Verhältnis ihrer freiliegenden Kondensationsfläche zu ihrem Gesamtvolumen (aufgrund der geringen Dicke der Beinchen) aufweisen.

## Patentansprüche

1. Heizvorrichtung (1) zum Erwärmen von insbesondere Leiterplatten (2) mit einem Eingabebereich (3) zur Zufuhr der Leiterplatten in im wesentlichen horizontaler Richtung, wenigstens einem sich in Transportrichtung (4) stromabwärts zum Eingabebereich anschließenden Heizbereich (5), einem Ausgabebereich (6) zur Abgabe aus dem Heizbereich zugeführter Leiterplatten in im wesentlichen horizontaler Richtung und einer Eingabebereich (3), Heizbereich (5) und Ausgabebereich (6) verbindenden Transporteinrichtung (7), **dadurch gekennzeichnet**, daß ein Transportweg (9) der Transporteinrichtung (7) im Heizbereich (5) in einer Ebene (10) im wesentlichen quer zur horizontalen Zufuhr- oder Abgaberichtung (4) verläuft und der Transportweg Eingabe- und Ausgabebereich (3, 6) in etwa ringförmig verbindet.

2. Heizvorrichtung nach Anspruch 1, **dadurch gekennzeichnet,** daß die Transporteinrichtung (7) eine Hub- und/oder Absenkeinrichtung (11) zur Übergabe der Leiterplatten (2) von beziehungsweise an Eingabebereich (3) und/oder Ausgabebereich (6) aufweist.

3. Heizvorrichtung nach Anspruch 1 oder 2, **dadurch gekennzeichnet,** daß Eingabebereich (3) und Ausgabebereich (6) in einer Horizontalebene (12) angeordnet sind.

4. Heizvorrichtung nach wenigstens einem der vorangehenden Ansprüche, **dadurch gekennzeichnet**, daß der Heizbereich (5) entlang des Transportweges (9) wenigstens einen Vorwärmabschnitt (13), einen Wärmebearbeitungsabschnitt (14) und einen Abkühlabschnitt (15) aufweist.

5. Heizvorrichtung nach wenigstens einem der vorangehenden Ansprüche, **dadurch gekennzeichnet,** daß der Vorwärmabschnitt (13) als vertikal abwärts von der Transporteinrichtung (7) durchlaufender Vorwärmschacht (16) ausgebildet ist.

6. Heizvorrichtung nach wenigstens einem der vorangehenden Ansprüche, **dadurch gekennzeichnet,** daß der Abkühlabschnitt (15) als vertikal aufwärts von der Transporteinrichtung (7) durchlaufender Kühlschacht (17) ausgebildet ist.

7. Heizvorrichtung nach wenigstens einem der vorangehenden Ansprüche, **dadurch gekennzeichnet**, daß der Wärmebearbeitungsabschnitt (14) als Vorwärmschacht (16) und Kühlschacht (17) im wesentlichen an deren unteren Enden (29, 30) verbindender Verbindungsschacht (18) ausgebildet ist.

8. Heizvorrichtung nach den Ansprüchen 5, 6 und 7, **dadurch gekennzeichnet,** daß Mittel zur Aufnahme eines einen für das Dampfphasenlötverfahren erforderlichen Heißdampfs erzeugenden Mediums, Mittel zum Erhitzen und Sieden des Mediums und Mittel zum Verhindern seitlichen Ausbreitens des Heißdampfes vorgesehen sind.

9. Heizvorrichtung gemäß Anspruch 8, **dadurch gekennzeichnet,** daß die Mittel zur Aufnahme und zum Erhitzen und Sieden des Mediums derart ausgebildet sind, daß sich die Heißdampfschicht über dem siedenden Medium im Bereich des Wärmebearbeitungsabschnitts, der zwischen dem Vorwärmschacht und dem Kühlschacht angeordnet ist, ausbildet.

10. Heizvorrichtung nach wenigstens einem der vorangehenden Ansprüche, **dadurch gekennzeichnet,** daß Vorwärmschacht (16) und/oder Verbindungsschacht (18) und/oder Kühlschacht (17) gasdicht ausgebildet sind.

11. Heizvorrichtung nach wenigstens einem der vorangehenden Ansprüche, **dadurch gekennzeichnet,** daß im Vorwärmschacht (16) und/oder Verbindungsschacht (18) und/oder Kühlschacht (17) ein Inert-Gas und/oder Luft und/oder Gasgemisch enthalten ist.

12. Heizvorrichtung nach wenigstens einem der vorangehenden Ansprüche, **dadurch gekennzeichnet,** daß wenigstens eine Aufheizeinrichtung (19) dem Verbindungsschacht (18) zur Wärmeübertragung auf Leiterplatten (2) zugeordnet ist.

13. Heizvorrichtung nach wenigstens einem der vorangehenden Ansprüche, **dadurch gekennzeichnet,** daß die Aufheizeinrichtung (19) wenigstens stellenweise zusätzlich eine Infrarotstrahlungsquelle aufweist.

14. Heizvorrichtung nach wenigstens einem der vorangehenden Ansprüche, **dadurch gekennzeichnet,** daß Eingabe- und/oder Ausgabebereich (3, 6) zur Zufuhr beziehungsweise Abgabe von Leiterplatten an beziehungsweise von der Heizvorrichtung (1) ein Transportsystem (20) zugeordnet ist.

15. Heizvorrichtung nach wenigstens einem der vorangehenden Ansprüche, **dadurch gekennzeichnet,** daß der Verbindungsschacht (18) wenigstens zwei unterschiedlich von der Aufheizeinrichtung (19) beheizbare Heizzonen (21, 22) aufweist.

16. Heizvorrichtung nach wenigstens einem der vorangehenden Ansprüche, **dadurch gekennzeichnet,** daß die Transporteinrichtung (7) verschiedene durch Übergabeeinrichtungen (24, 25) miteinander verbundene Transportabschnitte (23, 31, 32) in den jeweiligen Schächten (16, 17, 18) aufweist.

17. Heizvorrichtung nach wenigstens einem der vorangehenden Ansprüche, **dadurch gekennzeichnet**, daß zwischen Eingabe- und Ausgabebereich (3, 6) und der Transporteinrichtung (7) Übergabeeinrichtungen (33, 34) zu Übergabe von Leiterplatten vom Eingabebereich (3) an die Transporteinrichtung (7) beziehungsweise von der Transporteinrichtung (7) an den Ausgabebereich (6) angeordnet sind.

18. Heizvorrichtung nach wenigstens einem der vorangehenden Ansprüche, **dadurch gekennzeichnet,** daß die Transporteinrichtung (7) zumindest teilweise entlang des Transportweges (9) bewegbare Warenträger (26) aufweist.

19. Heizvorrichtung nach wenigstens einem der vorangehenden Ansprüche, **dadurch gekennzeichnet,** daß die Übergabeeinrichtungen (24, 25, 33, 34) zur Übergabe von Leiterplatten oder Warenträgem (26) ausgebildet sind.

20. Heizvorrichtung nach wenigstens einem der vorangehenden Ansprüche, **dadurch gekennzeichnet,** daß die Transporteinrichtung (7) ein Steuersystem (27) zur Betätigung der Übergabeeinrichtungen (24, 25, 33, 34), zur Steuerung der Warenträger (26) oder dergleichen aufweist.

21. Heizvorrichtung nach wenigstens einem der vorangehenden Ansprüche, **dadurch gekennzeichnet,** daß jeder Warenträger (26) eine verstellbare Trageinrichtung zur Aufnahme unterschiedlicher Formate von Leiterplatten (2) aufweist.

22. Heizvorrichtung nach wenigstens einem der vorangehenden Ansprüche, **dadurch gekennzeichnet,** daß die Übergabeeinrichtungen (24, 25) zur Übergabe von Warenträgem (26) zwischen den Schächten (16, 17, 18) ausgebildet sind und die Warenträger (26) im Kreislauf entlang des Transportweges (9) bewegbar sind.

23. Heizvorrichtung nach wenigstens einem der vorangehenden Ansprüche, **dadurch gekennzeichnet,** daß die Transporteinrichtung (7) eine Pufferstation (28) zur Einlagerung beziehungsweise Entnahme von Warenträgem (26) aufweist.

24. Heizvorrichtung nach wenigstens einem der vorangehenden Ansprüche, **dadurch gekennzeichnet**, daß Eingabebereich (3) und/oder Ausgabebereich (6) und/oder Heizbereich (5) und/oder Transporteinrichtung (7) Sensoren zugeordnet sind.

25. Heizvorrichtung nach wenigstens einem der vorhergehenden Ansprüche, **dadurch gekennzeichnet,** daß der Warenträger (26) an unterschiedliche Formate von Leiterplatten (2) anpaßbar ist.

26. Heizvorrichtung nach wenigstens einem der vorhergehenden Ansprüche, **dadurch gekennzeichnet,** daß der Warenträger (26) einen Außenrahmen und eine relativ zum Außenrahmen verstellbare Stützeinrichtung zur Unterstützung von wenigstens einer Leiterplatte unterschiedlicher Formate aufweist.

27. Heizvorrichtung nach wenigstens einem der vorhergehenden Ansprüche, **dadurch gekennzeichnet,** daß zumindest die Aufheizvorrichtung (19) zur Parallelverarbeitung von Leiterplatten (2) im Verbindungsschacht (18) parallele und separat heizbare Transportabschnitte (31) aufweist.

28. Verfahren zur Wärmebehandlung, insbesondere von Leiterplatten, mit den folgenden Verfahrensschritten:
Zuführen der Leiterplatten und Transportieren der Leiterplatten zu einer Heizvorrichtung in im wesentlichen horizontaler Richtung,
Aufheizen der Leiterplatten in der Heizvorrichtung, und
Transportieren der Leiterplatten von der Heizeinrichtung weg zur Ausgabe wiederum entlang einer im wesentlichen horizontalen Richtung,
**dadurch gekennzeichnet,**
daß die Leiterplatten in der Heizeinrichtung entlang eines Pfads in einer Ebene im wesentlichen quer zur horizontalen Zufuhr- oder Ausgaberichtung auf einem im wesentlichen ringförmigen Pfad befördert werden.

29. Verfahren nach Anspruch 28, **dadurch gekennzeichnet,** daß in der Heizeinrichtung die Leiterplatte während einer Beförderung im wesentlichen vertikal nach unten vorgeheizt wird, anschließend an die Absenkung während einer Beförderung wiederum in horizontaler Richtung einem Hauptaufheizvorgang unterworfen wird, und anschließend an die horizontale Beförderung während einer Beförderung in vertikaler Richtung wieder abgekühlt wird.

30. Verfahren nach Anspruch 28 oder 29, **dadurch gekennzeichnet**, daß für das Aufheizen der Leiterplatten Konvektionshitze verwendet wird.

31. Verfahren nach einem der Ansprüche 28-30, **dadurch gekennzeichnet,** daß für das Aufheizen der Leiterplatten Infrarotstrahlung vorgesehen wird.

32. Verfahren nach einem der Ansprüche 28-31, **dadurch gekennzeichnet,** daß die einzelnen Schritte des Vorwärmens, Erhitzens und Abkühlens unter Einfluß eines Inertgasstroms oder eines Gasgemisches erfolgen.

33. Verfahren nach einem der Ansprüche 28-32, **dadurch gekennzeichnet**, daß die Leiterplatten auf Warenträger geladen werden zum Transport durch die Heizvorrichtung.

34. Verfahren nach Anspruch 33, **dadurch gekennzeichnet**, daß die Warenträger in einer Pufferstation vorrätig gehalten werden und bei Eintreffen einer neuen wärmezubehandelnden Leiterplatte abgerufen werden.

## Claims

1. A heating apparatus (1) for heating, in particular, circuit boards (2), comprising a feed portion (3) for feeding the circuit boards in a substantially horizontal direction, at least one heating portion (5) following in transportation direction (4) downstream of the feed portion, a discharge portion (6) for the discharge of circuit boards supplied from the heating portion in a substantially horizontal direction, and a transportation device (7) connecting feed portion (3), heating portion (5) and discharge portion (6), **characterized in** that a transportation path (9) of the transportation device (7) in the heating portion (5) extends in a plane (10) substantially in a direction transverse to the horizontal feed or discharge direction (4) and the transportation path connects feed and discharge portions (3, 6) in substantially ring-like configuration.

2. The heating apparatus according to claim 1, **characterized in** that the transportation device (7) comprises a lifting and/or lowering device (11) for transferring the circuit boards (2) from or to the feed portion (3) and/or the discharge portion (6).

3. The heating apparatus according to claim 1 or 2, **characterized in** that feed portion (3) and discharge portion (6) are arranged in a horizontal plane (12).

4. The heating apparatus according to at least one of the preceding claims, **characterized in** that the heating portion (5) along the transportation path (9) has at least one preheating section (13), a thermal processing section (14) and a cooling section (15).

5. The heating apparatus according to at least one of the preceding claims, **characterized in** that the preheating section (13) is designed as a preheating shaft (16) passing vertically downwards from the transportation device (7).

6. The heating device according to at least one of the preceding claims, **characterized in** that the cooling section (15) is designed as a cooling shaft (17) passing vertically upwards from the transportation device (7).

7. The heating apparatus according to at least one of the preceding claims, **characterized in** that the thermal processing section (14) is designed as a connection shaft (18) connecting preheating shaft (16) and cooling shaft (17) substantially at the lower ends (29, 30) thereof.

8. The heating apparatus according to claims 5, 6 and 7, **characterized in** that means are provided for receiving a medium producing heated vapor required for the vapor-phase soldering method, means for heating and boiling the medium and means for preventing a lateral propagation of the heated vapor.

9. The heating apparatus according to claim 8, **characterized in** that the means for receiving and heating and boiling the medium are designed such that the heated vapor layer is formed above the boiling medium in the area of the thermal processing section which is arranged between the preheating shaft and the cooling shaft.

10. The heating apparatus according to at least one of the preceding claims, **characterized in** that preheating shaft (16) and/or connection shaft (18) and/or cooling shaft (17) are made gas-tight.

11. The heating apparatus according to at least one of the preceding claims, **characterized in** that an inert gas and/or air and/or gas mixture is(are) contained in the preheating shaft (16) and/or connection shaft (18) and/or cooling shaft (17).

12. The heating apparatus according to at least one of the preceding claims, **characterized in** that at least one heating device (19) is assigned to the connection shaft (18) for heat transfer to circuit boards (2).

13. The heating apparatus according to at least one of the preceding claims, **characterized in** that the heating device (19) additionally comprises a source of infrared radiation, at least in places.

14. The heating apparatus according to at least one of the preceding claims, **characterized in** that a transportation system (20) is assigned to feed and/or discharge portion (3, 6) for the supply or discharge of circuit boards to or from the heating apparatus (1).

15. The heating apparatus according to at least one of the preceding claims, **characterized in** that the connection shaft (18) comprises at least two heating zones (21, 22) that are differently heatable by the heating device (19).

16. The heating apparatus according to at least one of the preceding claims, **characterized in** that the transportation device (7) comprises different transportation sections (23, 31, 32) in the respective shafts (16, 17, 18), said transportation sections being interconnected by transfer devices (24, 25).

17. The heating apparatus according to at least one of the preceding claims, **characterized in** that transfer devices (33, 34) are arranged beween feed and discharge portion (3, 6) and transportation device (7) for transferring circuit boards from the feed portion (3) to the transportation device (7) and from the transportation device (7) to the discharge portion (6), respectively.

18. The heating apparatus according to at least one of the preceding claims, **characterized in** that the transportation device (7) comprises article carriers (26) which are movable along the transportation path (9) at least in part.

19. The heating apparatus according to at least one of the preceding claims, **characterized in** that the transfer devices (24, 25, 33, 34) are designed for transferring circuit boards or article carriers (26).

20. The heating apparatus according to at least one of the preceding claims, **characterized in** that the transportation device (7) comprises a control system (27) for operating the transfer devices (24, 25, 33, 34), for controlling the article carriers (26), or the like.

21. The heating apparatus according to at least one of the preceding claims, **characterized in** that each article carrier (26) comprises an adjustable carrying device for receiving different sizes of circuit boards (2).

22. The heating apparatus according to at least one of the preceding claims, **characterized in** that the transfer devices (24, 25) are designed for transferring article carriers (26) between the shafts (16, 17, 18), and the article carriers (26) are movable in a circuit along the transportation path (9).

23. The heating apparatus according to at least one of the preceding claims, **characterized in** that the transportation device (7) comprises a buffer station (28) for storing or removing article carriers (26).

24. The heating apparatus according to at least one of the preceding claims, **characterized in** that sensors are assigned to feed portion (3) and/or discharge portion (6) and/or heating portion (5) and/or transportation device (7).

25. A heating apparatus according to at least one of the preceding claims, **characterized in** that the article carrier (26) can be adapted to different sizes of circuit boards (2).

26. The heating apparatus according to at least one of the preceding claims, **characterized in** that the article carrier (26) has an outer frame and a support device which is adjustable relative to said outer frame, for supporting at least one circuit board of different sizes.

27. The heating apparatus according to at least one of the preceding claims, **characterized in** that at least the heating device (19) comprises parallel and separately heatable transportation sections (31) for the parallel processing of circuit boards (2) in the connection shaft (18).

28. A method for the thermal treatment, in particular, of circuit boards, comprising the following steps:
feeding the circuit boards and transporting said circuit boards to a heating apparatus in a substantially horizontal direction,
heating the circuit boards in the heating apparatus, and
transporting the circuit boards away from the heating device for discharge again along a substantially horizontal direction,
**characterized in**
that the circuit boards are transported in the heating device along a path in a plane substantially in a direction transverse to the horizontal feed or discharge direction along a substantially ring-like path.

29. The method according to claim 28, **characterized in** that in the heating device the circuit board is preheated while being transported substantially vertically downwards, following the lowering step it is subjected to a main heating operation while being again transported in horizontal direction, and following the horizontal transportation it is again cooled while being transported in vertical direction.

30. The method according to claim 28 or 29, **characterized in** that convection heat is used for heating the circuit boards.

31. The method according to any one of claims 28 to 30, **characterized in** that infrared radiation is provided for heating the circuit boards.

32. The method according to any one of claims 28 to 31, **characterized in** that the individual steps of preheating, heating and cooling are carried out under the action of an inert gas flow or a gas mixture.

33. The method according to any one of claims 28 to 32, **characterized in** that the circuit boards are loaded onto article carriers for transportation through the heating apparatus.

34. The method according to claim 33, **characterized in** that the article carriers are kept in stock in a buffer station and are fetched upon arrival of a new circuit board to be heat-treated.

## Revendications

1. Dispositif de chauffage (1) destiné à chauffer notamment des cartes de circuits imprimés (2) comprenant une zone d'entrée (3) pour l'alimentation des cartes de circuits imprimés dans le sens essentiellement horizontal, au moins une zone de chauffage (5) se raccordant dans le sens de transport (4) en aval de la zone d'entrée, une zone de sortie (6) pour dégager de la zone de chauffage les cartes de circuits imprimés alimentées, dans le sens essentiellement horizontal et un dispositif de transport (7) reliant zone d'entrée (3), zone de chauffage (5) et zone de sortie (6), caractérisé en ce qu'un parcours de transport (9) du dispositif de transport (7) passe dans la zone de chauffage (5) dans un plan (10) essentiellement transversalement au sens d'alimentation ou de dégagement horizontal (4) et le parcours de transport relie de façon presque annulaire zone d'entrée et zone de sortie (3, 6).

2. Dispositif de chauffage selon la revendication 1, caractérisé en ce que le dispositif de transport (7) présente un dispositif de levage et/ou d'abaissement (11) pour le transfert des cartes de circuits imprimés (2) de, ou bien à, la zone d'entrée (3) et/ou la zone de sortie (6).

3. Dispositif de chauffage selon la revendication 1 ou 2, caractérisé en ce que la zone d'entrée (3) et la zone de sortie (6) sont disposées dans un plan horizontal (12).

4. Dispositif de chauffage selon l'une au moins des revendications précédentes, caractérisé en ce que la zone de chauffage (5) présente le long du parcours de transport (9) au moins une section de préchauffage (13), une section de traitement thermique (14) et une section de refroidissement (15).

5. Dispositif de chauffage selon l'une au moins des revendications précédentes, caractérisé en ce que la section de préchauffage (13) est conçue comme un puits de préchauffage (16) descendant à la verticale du dispositif de transport (7).

6. Dispositif de chauffage selon l'une au moins des revendications précédentes, caractérisé en ce que la section de refroidissement (15) est conçue comme un puits de refroidissement (17) montant à la verticale du dispositif de transport (7).

7. Dispositif de chauffage selon l'une au moins des revendications précédentes, caractérisé en ce que la section de traitement thermique (14) est conçue comme un puits de jonction (18) reliant le puits de préchauffage (16) et le puits de refroidissement (17) essentiellement à leurs extrémités inférieures (29, 30).

8. Dispositif de chauffage selon les revendications 5, 6 et 7, caractérisé en ce que sont prévus des moyens de réception d'un milieu produisant une vapeur chaude nécessaire pour le procédé de soudure en phase vapeur, des moyens pour chauffer et faire bouillir le milieu et des moyens pour empêcher l'extension latérale de la vapeur chaude.

9. Dispositif de chauffage selon la revendication 8, caractérisé en ce que les moyens pour recevoir et pour chauffer et faire bouillir le milieu sont conçus de telle sorte que la couche de vapeur chaude se forme au-dessus du milieu en ébullition dans la zone de la section de traitement thermique, qui est disposée entre le puits de préchauffage et le puits de refroidissement.

10. Dispositif de chauffage selon l'une au moins des revendications précédentes, caractérisé en ce que le puits de préchauffage (16) et/ou le puits de jonction (18) et/ou le puits de refroidissement (17) sont conçus pour être étanches au gaz.

11. Dispositif de chauffage selon l'une au moins des revendications précédentes, caractérisé en ce que le puits de préchauffage (16) et/ou le puits de jonction (18) et/ou le puits de refroidissement (17) contiennent un gaz inerte et/ou de l'air et/ou un mélange gazeux.

12. Dispositif de chauffage selon l'une au moins des revendications précédentes, caractérisé en ce qu'au moins un dispositif d'échauffement (19) est associé au puits de jonction (18) pour la transmission de la chaleur aux cartes de circuits imprimés (2).

13. Dispositif de chauffage selon l'une au moins des revendications précédentes, caractérisé en ce que le dispositif d'échauffement (19) présente en plus, au moins par endroits, une source de rayonnement infrarouge.

14. Dispositif de chauffage selon l'une au moins des revendications précédentes, caractérisé en qu'un système de transport (20) est associé à la zone d'entrée et/ou de sortie (3,6) pour l'alimentation ou bien le dégagement de cartes de circuits imprimés au, ou bien du dispositif de chauffage (1).

15. Dispositif de chauffage selon l'une au moins des revendications précédentes, caractérisé en ce que le puits de jonction (18) présente au moins deux zones de chauffage (21, 22) pouvant être chauffées différemment du dispositif d'échauffement (19).

16. Dispositif de chauffage selon l'une au moins des revendications précédentes, caractérisé en ce que le dispositif de transport (7) présente dans les puits respectifs (16, 17, 18) différentes sections de transport (23, 31, 32) reliées ensemble par des dispositifs de transfert (24, 25).

17. Dispositif de chauffage selon l'une au moins des revendications précédentes, caractérisé en ce des dispositifs de transfert (33, 34), destinés au transfert des cartes de circuits imprimés de la zone d'entrée (3) au dispositif de transport (7) ou bien du dispositif de transport (7) à la zone de sortie (6), sont disposés entre la zone d'entrée et de sortie (3,6) et le dispositif de transport (7).

18. Dispositif de chauffage selon l'une au moins des revendications précédentes, caractérisé en ce que le dispositif de transport (7) présente au moins partiellement le long du parcours de transport (9) des supports de marchandises mobiles (26).

19. Dispositif de chauffage selon l'une au moins des revendications précédentes, caractérisé en ce que les dispositifs de transfert (24, 25, 33, 34) sont conçus pour le transfert des cartes de circuits imprimés ou des supports de marchandises (26).

20. Dispositif de chauffage selon l'une au moins des revendications précédentes, caractérisé en ce que le dispositif de transport (7) présente un système de commande (27) pour l'actionnement des dispositifs de transfert (24, 25, 33, 34), pour la commande des supports de marchandises (26) ou similaires.

21. Dispositif de chauffage selon l'une au moins des revendications précédentes, caractérisé en ce que chaque support de marchandises (26) présente un dispositif porteur réglable pour recevoir différentes formats de cartes de circuits imprimés (2).

22. Dispositif de chauffage selon l'une au moins des revendications précédentes, caractérisé en ce que les dispositifs de transfert (24, 25) sont conçus pour le transfert de supports de marchandises (26) entre les puits (16, 17, 18) et les supports de marchandises (26) peuvent être déplacés selon un mouvement circulaire le long du parcours de transport (9).

23. Dispositif de chauffage selon l'une au moins des revendications précédentes, caractérisé en ce que le dispositif de transport (7) présente une station tampon (28) pour le stockage ou bien la reprise de supports de marchandises (26).

24. Dispositif de chauffage selon l'une au moins des revendications précédentes, caractérisé en ce que (la) zone d'entrée (3) et/ou (le) zone de sortie (6) et/ou (la) zone de chauffage (5) et/ou (le) dispositif de transport (7) sont associés à des capteurs.

25. Dispositif de chauffage selon l'une au moins des revendications précédentes, caractérisé en ce que le support de marchandises (26) est adaptable à différents formats de cartes de circuits imprimés (2).

26. Dispositif de chauffage selon l'une au moins des revendications précédentes, caractérisé en ce que le support de marchandises (26) présente un cadre externe et un dispositif d'appui réglable relativement au cadre externe pour le support d'au moins une carte de circuits imprimés, de formats différents.

27. Dispositif de chauffage selon l'une au moins des revendications précédentes, caractérisé en ce qu'au moins le dispositif d'échauffement (19) présente des sections de transport (31) parallèles et pouvant être chauffées séparément pour le traitement parallèle des cartes de circuits imprimés (2) dans le puits de jonction (18).

28. Procédé de traitement thermique, notamment de cartes de circuits imprimés, comprenant les étapes de procédé suivantes :
alimentation des cartes de circuits imprimés et transport des cartes de circuits imprimés vers un dispositif de chauffage dans le sens essentiellement horizontal,
échauffement des cartes de circuits imprimés dans le dispositif de chauffage, et
transport des cartes de circuits imprimés depuis le dispositif de chauffage pour dégagement de nouveau le long d'un sens essentiellement horizontal,
caractérisé en ce que les cartes de circuits imprimés dans le dispositif de chauffage sont acheminées le long d'un chemin situé dans un plan essentiellement transversal au sens d'alimentation ou de dégagement horizontal sur un chemin essentiellement annulaire.

29. Procédé selon la revendication 28, caractérisé en ce que dans le dispositif de chauffage, la carte de circuits imprimés est préchauffée pendant un transport essentiellement à la verticale vers le bas, est soumise à un processus d'échauffement principal après l'abaissement pendant un transport de nouveau dans le sens horizontal, et après le transport horizontal est de nouveau refroidie pendant un transport dans le sens vertical.

30. Procédé selon la revendication 28 ou 29, caractérisé en ce qu'une chaleur à convection est utilisée pour l'échauffement des cartes de circuits imprimés.

31. Procédé selon l'une des revendications 28 à 30, caractérisé en ce qu'un rayonnement infrarouge est prévu pour l'échauffement des cartes de circuits imprimés.

32. Procédé selon l'une des revendications 28 à 31, caractérisé en ce que les différentes étapes de préchauffage, d'échauffement et de refroidissement ont lieu sous l'effet d'un flux de gaz inerte ou d'un mélange gazeux.

33. Procédé selon l'une des revendications 28 à 32, caractérisé en ce que les cartes de circuits imprimés sont chargées sur des supports de marchandises pour le transport à travers le dispositif de chauffage.

34. Procédé selon la revendication 33, caractérisé en ce que les supports de marchandises sont gardés en réserve dans une station tampon et sont appelés à l'arrivée d'une nouvelle carte de circuits imprimés devant être traitée thermiquement.
